# NEUE EUROPÄISCHE PATENTSCHRIFT

(11) **EP 1 077 366 B2**
(45) Veröffentlichungstag und Bekanntmachung des Hinweises auf die Entscheidung über den Einspruch: **14.05.2014**
(45) Hinweis auf die Patenterteilung: 08.12.2004
(21) Anmeldenummer: 00116686.7
(22) Anmeldetag: 02.08.2000
(51) Int. Cl.: G01K 17/06

(54) **Elektronischer Heizkostenverteiler**
Electronical heating-cost distributor
Distributeur électronique de frais de chauffage

(30) Priorität: 19.08.1999 DE 19938812
(43) Veröffentlichungstag der Anmeldung: 21.02.2001
(73) Patentinhaber: Hydrometer Electronic GmbH, 90451 Nürnberg (DE)
(72) Erfinder: Schlosser, Rüdiger, 91126 Schwabach (DE); Zimmermann, Jürgen, 90453 Nürnberg (DE); Pöhler, Ulrich, 91238 Offenhausen (DE); Churt, Kerstin, Dr., 91217 Hersbruck (DE)
(74) Vertreter: Diehl Patentabteilung

(56) Entgegenhaltungen:
- DE-A- 4 311 591
- DE-A- 4 429 934
- DE-U- 29 515 173
- DE-U- 29 719 339
- DE-U- 29 804 071

## Beschreibung

Die Erfindung betrifft einen elektronischen Heizkostenverteiler nach dem Oberbegriff des Anspruchs 1.

Ein solcher Heizkostenverteiler ist z. B. aus dem Gebrauchsmuster DE 295 15 173 U1 bekannt. Dort wird ein elektronischer Heizkostenverteiler mit zwei Temperatursensoren (einer zur Bestimmung der Oberflächentemperatur des Heizkörpers und einer zur Bestimmung der Zimmertemperatur) und elektronischer Auswerteeinheit beschrieben, bei dem die Temperatursensoren auf einem elastischen Band befestigt sind, wobei der eine Sensor durch dieses Band an die Gehäuserückseite gedrückt und damit in wärmeleitenden Kontakt mit dem Heizkörper gebracht wird, während der andere Sensor zur Gerätevorderseite hin positioniert wird.

Ein gattungsgemäßer Heizkostenverteiler ist auch aus der DE 44 29 934 A1 bekannt. Dort ist der Heizkörpersensor auf einer gedruckten Leiterplatte angeordnet, während der Raumluftsensor auf einem flexiblen Steg einer auf der Leiterplatte angeordneten LCD-Anzeige befestigt ist.

Die DE 298 04 071 U1 offenbart einen Heizkostenverteiler, bei dem der Heizkörpersensor auf einer verschwenkbar gelagerten Leiterplatte angeordnet ist und diese über eine Feder gegen eine Profilleiste eines fest am Heizkörper angeordneten Rückenteils angedrückt wird.

Der genannte Stand der Technik besitzt den Nachteil, dass die Montage der Temperatursensoren auf einem elastischen Band oder einem flexiblen Steg und die des Bandes bzw. Steges im Heizkostenverteiler aufwendig sind.

Der Erfindung stellt sich somit die Aufgabe, einen elektronischen Heizkostenverteiler vorzuschlagen, bei dem die Montage der Temperatursensoren einfach ist, wobei gleichzeitig gewährleistet bleibt, dass die Temperatursensoren für ihre Funktion möglichst vorteilhaft positioniert sind.

Diese Aufgabe wird durch einen elektronischen Heizkostenverteiler mit den Merkmalen des Patentanspruchs 1 gelöst. Ausführungsformen und Weiterbildungen der Erfindung ergeben sich aus den Unteransprüchen.

Der Kern der Erfindung liegt darin, dass der erste und der zweite Temperatursensor an gegenüberliegenden Enden auf einer die Auswerteelektronik tragenden Leiterplatte angeordnet sind, dass die Leiterplatte schräg im Gehäuse angeordnet ist, wobei das den ersten Temperatursensor tragende Ende der Leiterplatte zur Gehäuserückseite gerichtet ist und das den zweiten Temperatursensor tragende Ende zur Gehäusevorderseite gerichtet ist, und dass das den ersten Temperatursensor tragende Ende der Leiterplatte mittels eines Federelementes gegen die wärmeleitende Rückseite des Gehäuses thermisch kontaktierend angedrückt ist.

In bevorzugter Ausführungsform ist weiterhin vorgesehen, dass die Leiterplatte so ausgebildet ist, dass sie um eine Achse dreh- bzw. schwenkbar oder elastisch verformbar ist. Dabei ist besonders vorteilhaft, wenn die Leiterplatte um das dem ersten Temperatursensor gegenüberliegende Ende dreh- bzw. schwenkbar ausgebildet ist.

Des Weiteren wird vorgeschlagen, dass das Federelement mindestens eine Blechzunge aufweist, die entweder bei geschlossenem oder bei geöffnetem Gehäuse mit mindestens einer Kontaktfläche auf der Leiterplatte in elektrischem Kontakt steht oder auch bei geschlossenem und geöffnetem Gehäuse mit zwei voneinander getrennten Kontaktflächen auf der Leiterplatte in elektrischem Kontakt steht. Diese Kontaktflächen sind mit der Auswerteelektronik elektrisch verbunden, so daß die Auswerteelektronik die Position der Blechzunge detektieren kann und somit den Zustand des Heizkörperverteilers, d. h. ob das Gehäuse geöffnet oder geschlossen ist, feststellen kann.

Alternativ wird vorgeschlagen, daß das Federelement bei geschlossenem Gehäuse einen auf der Leiterplatte angeordneten Tastschalter betätigt und bei geöffnetem Gehäuse freigibt, so daß die mit dem Tastschalter elektrisch verbundene Auswerteelektronik wiederum feststellen kann, ob das Gehäuse geöffnet oder geschlossen ist.

In bevorzugter Weiterbildung ist vorgesehen, daß das mit der Auswerteelektronik in elektrischem Kontakt stehende Federelement auch als Antenne zur Datenübertragung per Funk verwendbar ist. Zusätzlich wird vorgeschlagen, daß beim Öffnen des Gehäuses der elektrische Kontakt zwischen dem als Antenne dienenden Federelement und der Auswerteelektronik unterbrochen wird, so daß die Datenfunkübertragung unmöglich wird und auch auf diese Weise das Öffnen des Gehäuses feststellbar ist.

Die Vorteile der Erfindung liegen darin, daß die Temperatursensoren direkt auf der Leiterplatte, die auch die Auswertelektronik trägt, befestigt werden und trotzdem in unterschiedlichen Temperaturbereichen liegen, ohne daß zusätzliche Maßnahmen für die Wärmeleitung notwendig sind. Des weiteren können Manipulationen am Heizkostenverteiler leicht erkannt werden. Darüber hinaus kann durch die Verwendung des Federelementes auch als Funkantenne der Aufwand bei der Herstellung des Heizkostenverteilers weiter gesenkt werden.

Im folgenden soll nun ein Ausführungsbeispiel der Erfindung anhand der Zeichnungen näher erläutert werden. Dabei ist in den Zeichnungen das für die Erfindung Wesentliche vereinfacht gezeigt, während andere Teile der Übersichtlichkeit halber weggelassen sind

Es zeigen:
- Figur 1: einen elektronischen Heizkostenverteiler in montiertem Zustand mit aufgeschnittenem Gehäuse seitlich von vorne gesehen,
- Figur 2: den Heizkostenverteiler von Figur 1 seitlich von hinten gesehen und
- Figur 3: den Heizkostenverteiler in demontiertem Zustand seitlich von vorne gesehen.

Ein elektronischer Heizkostenverteiler 1 besitzt ein Gehäuse 2, welches aus einem Vorderteil 3 und einer Rückseite 4 besteht. Die Rückseite 4 des Gehäuses 2 besteht aus einem wärmeleitenden Blech, welches direkt an einem (hier nicht gezeigten) Heizkörper befestigbar ist. Im Inneren des Gehäuses 2 des Heizkostenverteilers 1 befinden sich eine Batterie 5 zur Spannungsversorgung des Heizkostenverteilers 1, eine Leiterplatte 6 sowie ein Federelement 7. Auf der Leiterplatte 6 befinden sich eine nicht gezeigte Auswerteelektronik, ein erster und ein zweiter Temperatursensor 8, 9 sowie zwei Kontaktflächen 10. Die Temperatursensoren 8, 9 und die Kontaktflächen 10 sind ebenso wie die Batterie 5 mit der Auswerteelektronik elektrisch verbunden (nicht gezeigt).

Die Leiterplatte 6 ist mit ihrem unteren Ende 11 an dem Gehäusevorderteil 3 befestigt und um diesen Befestigungspunkt schwenkbar gelagert. Das Federelement 7 drückt das obere Ende 12 der Leiterplatte 6 gegen die Rückseite 4 des Gehäuses 2. Der erste Temperatursensor 8, welcher der Ermittlung der Oberflächentemperatur des Heizkörpers dient, ist am oberen Ende 12 der Leiterplatte 6 auf der der Gehäuserückseite 4 zugewandten Seite der Leiterplatte 6 befestigt und verschaltet. Durch das Federelement 7 wird er direkt an die Gehäuserückseite 4 angedrückt, so daß er zu dieser in thermischem Kontakt steht. Da die wärmeleitende Gehäuserückseite 4 direkt am Heizkörper befestigt ist, steht der erste Temperatursensor 8 somit mit dem Heizkörper in wärmeleitendem Kontakt.

Der zweite Temperatursensor 9, welcher der Ermittlung der Zimmertemperatur dient, ist am unteren Ende 11 der Leiterplatte 6 auf der dem Gehäusevorderteil 3 zugewandten Seite der Leiterplatte 6 befestigt und verschaltet. Dadurch liegt er soweit wie möglich von der Gehäuserückseite 4 entfernt, was für eine unverfälschte Messung der Zimmertemperatur notwendig ist.

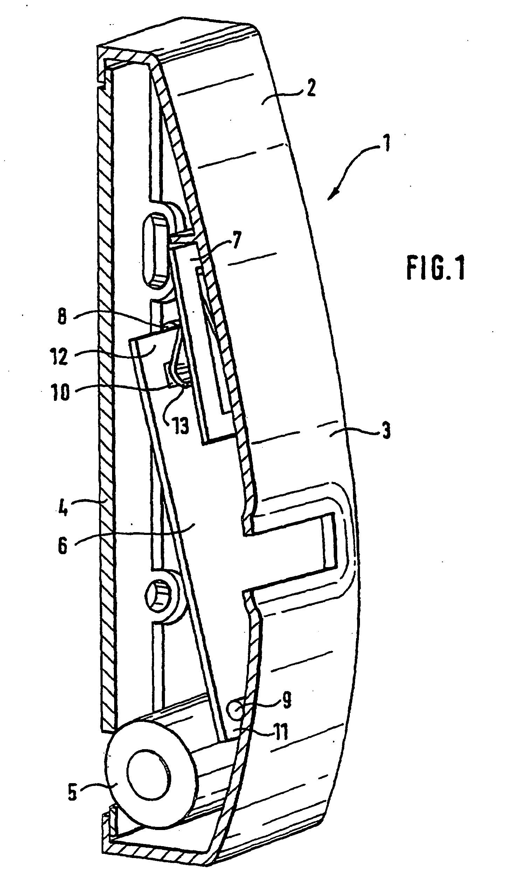

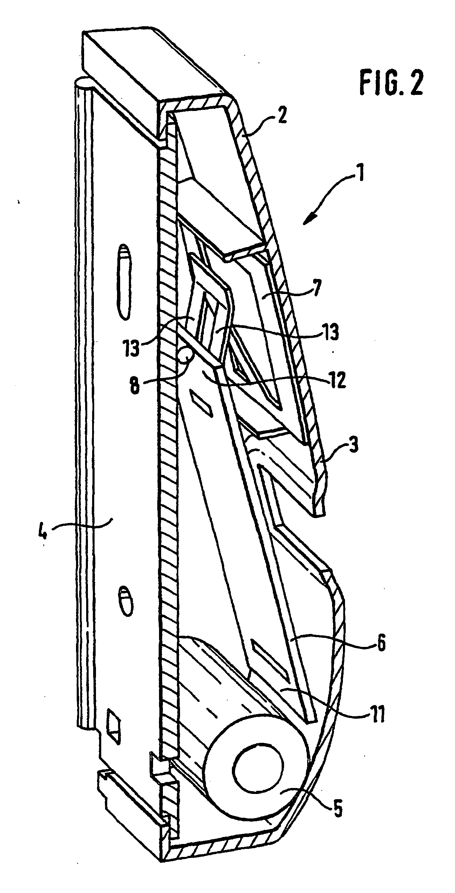

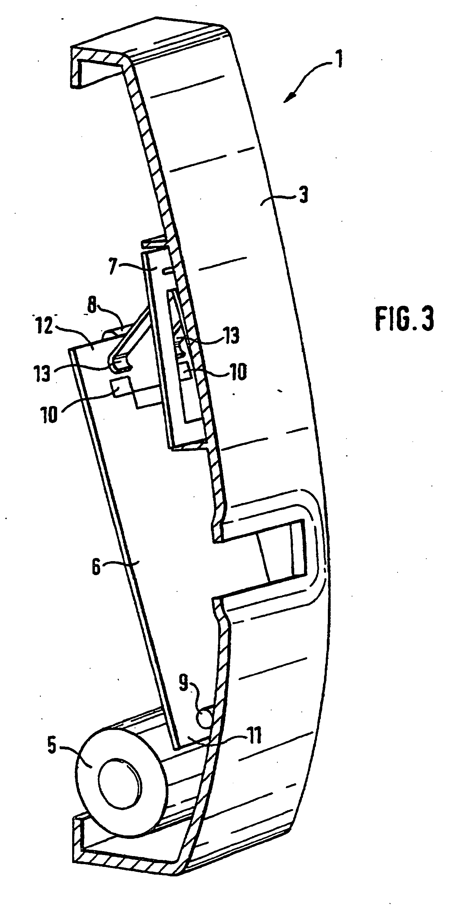

In montiertem Zustand, d. h. bei geschlossenem Gehäuse 2 (Figuren 1 und 2) ist das Federelement 7 über Blechzungen 13, welche die Federkraft auf die Leiterplatte 6 übertragen und mit den Kontaktflächen 10 in elektrischem Kontakt stehen, mit der Auswerteelektronik elektrisch leitend verbunden. Wird der Heizkostenverteiler 1 demontiert, d. h. das Gehäuse 2 durch Abnehmen der Rückseite 4 geöffnet, drückt das Federelement 7 mit seinen Blechzungen 13 die Leiterplatte 6 weiter nach hinten, da die begrenzende Gehäuserückseite 4 nun fehlt (Figur 3). Dabei rutschen die Blechzungen 13 von den Kontaktflächen 10 ab; das Federelement 7 ist nun nicht mehr mit der Auswerteelektronik elektrisch verbunden. Dies wird von der Auswerteelektronik detektiert. Auf diese Weise ist ein Öffnen des Gehäuses 2 und somit eine eventuelle Manipulation an dem Heizkostenverteiler 1 feststellbar.

Weiterhin dient das mit der Auswertelektronik elektrisch verbundene Federelement 7 als HF-Antenne für die Datenübertragung per Funk. Somit können die von der Auswerteelektronik aufgrund der Temperaturmessungen der Sensoren 8, 9 ermittelten Verbrauchswerte direkt über das Federelement 7 als HF-Antenne an eine (nicht gezeigte) Zentraleinheit gefunkt werden. Dies ist nur möglich, wenn das Federelement 7 über seine Blechzungen 13 mit den Kontaktflächen 10 auf der Leiterplatte 6 in elektrischem Kontakt steht, also nur bei geschlossenem Gehäuse, d. h. in montiertem Zustand. Wird das Gehäuse 2 des Heizkostenverteilers 1 geöffnet bzw. der Heizkostenverteiler 1 demontiert, wird - wie oben beschrieben - der elektrische Kontakt zwischen den Blechzungen 13 und den Kontaktflächen 10 unterbrochen, und ein Senden von Verbrauchsdaten an die Zentraleinheit ist nicht mehr möglich. Auf diese Weise ist auch durch die Zentraleinheit feststellbar, wenn das Gehäuse 2 (eventuell unbefugt) geöffnet bzw. der Heizkostenverteiler 1 demontiert wird.

Es sei darauf hingewiesen, daß neben dem anhand der Zeichnungen beschriebenen Ausfuhrungsbeispiel zahlreiche weitere Ausfuhrungsformen der Erfindung denkbar sind. So kann die Leiterplatte 6 auch elastisch verformbar ausgebildet sein und so von dem Federelement 7 auch dann gegen die Gehäuserückseite 4 gedrückt werden, wenn die Leiterplatte 6 nicht dreh- bzw. schwenkbar gelagert ist. Des weiteren kann auch vorgesehen sein, daß das Federelement 7 über seine Blechzungen 13 nicht bei geschlossenem, sondern bei geöffnetem Gehäuse mit den Kontaktflächen 10 in elektrischem Kontakt steht, oder daß die Blechzungen 13 bei geschlossenem und geöffnetem Gehäuse mit verschiedenen, voneinander getrennten Kotaktflächen 10 in elektrischem Kontakt stehen. Alternativ kann das Federelement 7 auch bei geschlossenem Gehäuse einen Tastschalter, der auf der Leiterplatte 6 befestigt und mit der Auswerteelektronik elektrisch verbunden ist, betätigen und bei geöffnetem Gehäuse freigeben, wodurch ebenfalls ein (eventuelle unbefugtes) Öffnen des Gehäuses durch die Auswerteelektronik feststellbar ist. Auch auf diese Ausführungsformen soll die Erfindung jedoch nicht beschränkt sein.

## Patentansprüche

1. Elektronischer Heizkostenverteiler mit mindestens einem ersten Temperatursensor (8) zur Ermittlung der Oberflächentemperatur des Heizkörpers, mit mindestes einem zweiten Temperatursensor (9) zur Ermittlung der Zimmertemperatur, mit einer Auswerteelektronik, die mit den Temperatursensoren (8, 9) elektrisch verbunden ist und mit einem Gehäuse (2), das geschlossen und geöffnet werden kann, wobei die Sensoren (8, 9) und die Auswerteelektronik in dem Gehäuse (2) angeordnet sind,
**dadurch gekennzeichnet,**
**dass** der erste und der zweite Temperatursensor (8, 9) an gegenüberliegenden Enden (12, 11) auf einer die Auswerteelektronik tragenden Leiterplatte (6) angeordnet sind, dass die Leiterplatte (6) schräg im Gehäuse (2) angeordnet ist, wobei das den ersten Temperatursensor (8) tragende Ende (12) der Leiterplatte (6) zur Gehäuserückseite (4) gerichtet ist und das den zweiten Temperatursensor (9) tragende Ende (11) der Leiterplatte (6) zur Gehäusevorderseite (3) gerichtet ist, und dass das den ersten Temperatursensor (8) tragende Ende (12) der Leiterplatte (6) mittels eines Federelementes (7) gegen die wärmeleitende Rückseite (4) des Gehäuses (2) thermisch kontaktierend angedrückt ist.

2. Elektronischer Heizkostenverteiler nach Anspruch 1,
**dadurch gekennzeichnet,**
**dass** die Leiterplatte (6) um eine Achse dreh- bzw. schwenkbar oder elastisch verformbar ausgebildet ist.

3. Elektronischer Heizkostenverteiler nach Anspruch 1 oder 2,
**dadurch gekennzeichnet,**
**dass** die Leiterplatte (6) um das dem ersten Temperatursensor (8) gegenüberliegende Ende (11) dreh- bzw. schwenkbar ist.

4. Elektronischer Heizkostenverteiler nach einem der vorherigen Ansprüche, **dadurch gekennzeichnet,**
**dass** das Federelement (7) mindestens eine Blechzunge (13) aufweist, welche wahlweise bei geschlossenem oder geöffnetem Gehäuse (2) mit mindestens einer Kontaktfläche (10) oder bei geschlossenem und geöffnetem Gehäuse (2) mit zwei voneinander getrennten Kontaktflächen (10) auf der Leiterplatte (6) in elektrischem Kontakt steht.

5. Elektronischer Heizkostenverteiler nach Anspruch 4,
**dadurch gekennzeichnet,**
**dass** die Position der Blechzunge (13) durch die Auswerteelektronik detektierbar und der Zustand des Heizkostenverteilers (1) dadurch feststellbar ist.

6. Elektronischer Heizkostenverteiler nach einem der Ansprüche 1 bis 3,
**dadurch gekennzeichnet,**
**dass** das Federelement (7) bei geschlossenem Gehäuse (2) einen auf der Leiterplatte (6) angeordneten Tastschalter betätigt, dass das Federelement (7) bei geöffnetem Gehäuse (2) den Tastschalter freigibt und dass bei Freigabe des Tastschalters durch die Auswerteelektronik ein Öffnen des Gehäuses (2) feststellbar ist.

7. Elektronischer Heizkostenverteiler nach einem der vorherigen Ansprüche,
**dadurch gekennzeichnet,**
**dass** das Federelement (7) mit der Auswerteelektronik in elektrischem Kontakt steht und als Antenne zur Datenfunkübertragung verwendbar ist.

8. Elektronischer Heizkostenverteiler nach Anspruch 7,
**dadurch gekennzeichnet,**
**dass** bei Öffnen des Gehäuses (2) der elektrische Kontakt zwischen dem als Antenne dienenden Federelement (7) und der Auswerteelektronik unterbrochen, die Datenfunkübertragung nicht mehr möglich und somit ein Öffnen des Gehäuses (2) feststellbar ist.

## Claims

1. Electronic heating cost distributor with at least one first temperature sensor (8) to determine the surface temperature of the radiator, with at least one second temperature sensor (9) to determine the room temperature, with a processor unit which is electrically connected to the temperature sensors (8, 9), and with a housing (2), which can be opened and closed, while the sensors (8, 9) and the processor unit are arranged within the housing (2),
**characterised in that**
the first and the second temperature sensors (8, 9) are arranged at opposite ends (12, 11) on a printed circuit board (6) bearing the processor unit, that the printed circuit board (6) is arranged at an angle in the housing (2), while the end (12) of the printed circuit board (6) bearing the first temperature sensor (8) is pointing towards the back side of the housing (4) and the end of the printed circuit board (6) bearing the second temperature sensor (9) is pointing towards the front side of the housing (3), and that the end (12) of the printed circuit board (6) bearing the first temperature sensor (8) is pressed by means of a spring element (7) in thermal contact against the heat-conducting back side (4) of the housing (2).

2. Electronic heating cost distributor according to claim 1,
**characterised in that**
the printed circuit board (6) is designed so as to rotate or pivot about an axis or is flexible and resilient.

3. Electronic heating cost distributor according to claims 1 or 2,
**characterised in that**
the printed circuit board (6) rotates or pivots about the end (11) opposite the first temperature sensor (8).

4. Electronic heating cost distributor according to one of the preceding claims,
**characterised in that**
the spring element (7) displays at least one metal tongue (13) which optionally when the housing (2) is opened or closed is in electrical contact with at least one contact area (10) or when the housing (2) is closed and opened with two contact areas (11) separated from each other on the printed circuit board (6).

5. Electronic heating cost distributor according to claim 4,
**characterised in that**
the position of the metal tongues (13) can be detected by the processor unit and the status of the heating cost distributor (1) thereby determined.

6. Electronic heating cost distributor according to one of claims 1 to 3,
**characterised in that**
the spring element (7), when the housing (2) is closed, actuates a touch contact arranged on the printed circuit board (6), that the spring element (7) releases the touch contact when the housing (2) is opened and that when the touch contact is released any opening of the housing (2) can be detected by the processor unit.

7. Electronic heating cost distributor according to one of the preceding claims,
**characterised in that**
the spring element (7) is in electrical contact with the processor unit and can be used as an antenna for data radio transmission.

8. Electronic heating cost distributor according to claim 7,
**characterised in that**
when the housing (2) is opened, the electrical contact between the spring element (7) serving as antenna and the processor unit is interrupted, data radio transmission is no longer possible and thus any opening of the housing (2) can be detected.

## Revendications

1. Répartiteur électronique de coûts de chauffage, comportant au moins un premier capteur de température (8) pour déterminer la température superficielle du radiateur, comportant au moins un deuxième capteur de température (9) pour déterminer la température ambiante, comportant une électronique d'exploitation qui est connectée électriquement aux capteurs de température (8, 9) et comportant un boîtier (2) que l'on peut fermer et ouvrir, les capteurs (8, 9) et l'électronique d'exploitation étant montés dans le boîtier (2), **caractérisé en ce que** le premier et le deuxième capteur de température (8, 9) sont disposés à des extrémités (12, 11) opposées sur une plaquette de circuits imprimés (6) portant l'électronique d'exploitation, **en ce que** la plaquette de circuits imprimés (6) est disposée obliquement dans le boîtier (2), l'extrémité (12) de la plaquette de circuits imprimés (6), portant le premier capteur de température (8), étant orientée vers la face arrière (4) du boîtier et l'extrémité (11) de la plaquette de circuits imprimés (6), portant le deuxième capteur de température (9), étant orientée vers la face avant (3) du boîtier, et **en ce que** l'extrémité (12) de la plaquette de circuits imprimés (6), portant le premier capteur de température (8), est pressée, au moyen d'un élément à ressort (7), avec contact thermique contre la face arrière (4) thermoconductrice du boîtier (2).

2. Répartiteur électronique de coûts de chauffage selon la revendication 1, **caractérisé en ce que** la plaquette de circuits imprimés (6) est réalisée de manière à pouvoir tourner ou pivoter autour d'un axe ou est déformable élastiquement.

3. Répartiteur électronique de coûts de chauffage selon la revendications 1 ou 2, **caractérisé en ce que** la plaquette de circuits imprimés (6) peut tourner ou pivoter autour de l'extrémité (11) opposée au premier capteur de température (8).

4. Répartiteur électronique de coûts de chauffage selon l'une des revendications précédentes, **caractérisé en ce que** l'élément à ressort (7) comporte au moins une languette en tôle (13) qui est en contact électrique avec au moins une surface de contact (10) de la plaquette à cicurits imprimés (6) pour le boîtier (2) fermé ou ouvert, ou avec deux surfaces de contact (10) de la plaquette de circuits imprimés (6) séparées l'une de l'autre pour le boîtier (2) fermé et le boîtier (2) ouvert.

5. Répartiteur électronique de coûts de chauffage selon la revendication 4, **caractérisé en ce que** la position de la languette en tôle (13) peut être détectée par l'électronique d'exploitation et l'état du répartiteur de coûts de chauffage (1) peut ainsi être constaté.

6. Répartiteur électronique de coûts de chauffage selon l'une des revendications 1 à 3, **caractérisé en ce que** lorsque le boîtier (2) est fermé, l'élément à ressort (7) actionne un interrupteur à touche disposé sur la plaquette de circuits imprimés (6), **en ce que** lorsque le boîtier (2) est ouvert, l'élément à ressort (7) libère l'interrupteur à touche et **en ce que** lorsque l'interrupteur à touche est libéré, l'électronique d'exploitation peut constater une ouverture du boîtier (2).

7. Répartiteur électronique de coûts de chauffage selon l'une des revendications précédentes, **caractérisé en ce que** l'élément à ressort (7) est en contact électrique avec l'électronique d'exploitation et peut être utilisé comme antenne pour la radiotransmission de données.

8. Répartiteur électronique de coûts de chauffage selon la revendication 7, **caractérisé en ce qu'**à l'ouverture du boîtier (2), le contact électrique entre l'élément à ressort (7) servant d'antenne et l'électronique d'exploitation est interrompu, la radiotransmission de données n'est plus possible et une ouverture du boîtier (2) peut ainsi être constatée.
